# EUROPÄISCHE PATENTANMELDUNG

(11) **EP 2 058 113 A2**
(43) Veröffentlichungstag der Anmeldung: **13.05.2009**
(21) Anmeldenummer: 08165903.9
(22) Anmeldetag: 06.10.2008
(51) Int. Cl.: B29D 22/00, B29C 49/20

(54) **Verfahren zum Herstellen bombierter, schlauchförmiger Erzeugnisse**

(30) Priorität: 06.11.2007 DE 102007052738
(71) Anmelder: Continental Aktiengesellschaft, 30165 Hannover (DE)
(72) Erfinder: Narberhaus, Stefan, 30826, Garbsen (DE); Hofmann, Rolf, 30625 Hannover (DE); Jeischik, Joachim, 30974 Wennigsen (DE)
(74) Vertreter: Finger, Karsten

(57) **Zusammenfassung**

Die Erfindung betrifft ein Verfahren zum Herstellen bombierter, schlauchförmiger Erzeugnisse (1) aus einem Schlauchzuschnitt (2), wie beispielsweise Luftfedern, wobei der Schlauchzuschnitt (2) an seinen Enden mit geeigneten Mitteln (3, 4) abgedichtet und mit einem Innenüberdruck (p_{B;} p_{V}) sowie einer Temperatur (T) beaufschlagt wird. Erfindungsgemäß ist vorgesehen, dass die Abdichtmittel (3, 4) nach anschließender Druckentlastung als Bestandteile des hergestellten Erzeugnisses (1) an diesem verbleiben. Die Anzahl der notwenigen Montageschritte und sowie der Verschnitt werden dadurch gegenüber bekannten Verfahren Kosten sparend reduziert.

## Beschreibung

Die Erfindung betrifft ein Verfahren zum Herstellen bombierter, schlauchförmiger Erzeugnisse aus einem Schlauchzuschnitt, wie beispielsweise Luftfedern, wobei der Schlauchzuschnitt an seinen Enden mit geeigneten Mitteln abgedichtet und mit einem Innenüberdruck sowie einer Temperatur beaufschlagt wird.

Derartige Verfahren dienen vor allem zur Herstellung von Luftfedern für den Einsatz im Kraftfahrzeugbereich. Das Kernstück solcher Luftfedern bildet ein schlauchförmiges, beidseitig gummiertes Gewebe. Das Gewebe dient dabei als Festigkeitsträger, wobei die Ausrichtung und der Abstand der Gewebefäden (Fadenlage) einen starken Einfluss auf die Dehn- bzw. Stauchbarkeit der Luftfeder haben. Das schlauchförmige Gewebe wird vom preisgünstig herzustellenden Endlosschlauch in entsprechend gewünschter Länge als so genannter Schlauchzuschnitt abgeschnitten.

Bei einer fertig montierten Luftfeder ist das obere Ende des Schlauchzuschnittes an einem flachen, deckelförmigen Kopf-Bauteil luftdicht befestigt und das untere Ende ebenso luftdicht an einem kolbenförmigen Fuß-Bauteil angebracht, wobei das untere Ende in eine Falte befestigt ist. Bei einer dynamischen Belastung der Luftfeder und entsprechender Abstandsänderung zwischen der Kopf- und Fußplatte (Höhe der Luftfeder) "rollt" diese Falte entlang der kolbenförmigen Fußplatte, die auch "Abrollkolben" genannt wird, ab. Um leichter eine Rollfalte bilden zu können, muss der ursprünglich zylindrische Schlauchzuschnitt in eine leicht konische oder auch tonnenförmige Form gebracht werden. Dies erfolgt mittels geeigneter Verfahren.

Ein solches gattungsgemäßes Verfahren ist aus der WO 2005/077631 A1 bekannt. Hierbei wird ein Schlauchzuschnitt in eine quer zur Schlauch-Längserstreckung zweigeteilte Vulkanisationsform gebracht und an seinen Enden mittels konischer Verschlussstopfen abgedichtet. Die Fixierung der Verschlussstopfen erfolgt durch ein Verschieben der Vulkanisationsform-Teile entlang der Längserstreckung des Schlauchzuschnitts in Richtung zu den Verschlussstopfen. Anschließend wird durch die Verschlussstopfen Druckluft bzw. ein Bombierungsdruck in den Schlauchzuschnitt geleitet und die Vulkanisationsform wieder verschlossen, so dass der Schlauchzuschnitt vollständig an der Vulkanisationsform anliegt. Die Vulkanisation des Schlauchzuschnitts erfolgt durch Aufbringung eines Vulkanisationsdampfdruckes mittels Heißdampf. Nach Beendigung der Vulkanisation wird die Vulkanisationsform wieder geöffnet und der fertig ausgeformte Gewebeschlauch kann entnommen und zu einer vollständigen Luftfeder ausgerüstet werden.

In der EP 1 407 875 B1 ist ebenfalls ein Verfahren zur Ausformung von Schlauchzuschnitten für Luftfedern bekannt. Hierbei wird der Schlauchzuschnitt über einen zylindrischen Heizbalg gezogen und der Heizbalg mit Druckluft beaufschlagt, so dass dieser den Schlauchzuschnitt von innen gegen eine im Innenraum nach außen gewölbte, bauchige und beheizbare Vulkanisationsform drückt. Nach dem Ende der Vulkanisationszeit kann aus der Vulkanisationsform ein bombiertes Zwischenprodukt entnommen werden. Dies wird jedoch anschließend quer zu seiner Längserstreckung mittig zerteilt, so dass zwei tonnenförmige Gewebeschläuche entstehen. Der Vorteil dieses Verfahrens wird insbesondere in der Vermeidung von Verschnitt an den Einspann-Enden des Schlauchzuschnitts gesehen, da es in der Mitte des Zwischenproduktes keinen Verschnitt gibt. Nach Erfahrung in der betrieblichen Praxis sind die Einspann-Enden der Schlauchzuschnitte für die weitere Verwendung in einer Luftfeder wegen Dichtigkeitsprobleme oftmals unbrauchbar und müssen abgetrennt werden.

Der Erfindung liegt die Aufgabe zugrunde, ein gattungsgemäßes Verfahren derart weiterzubilden, dass die Gefahr bzw. Notwendigkeit des Entstehens von Verschnitt gänzlich umgangen und die Prozesssicherheit weiter erhöht wird. Diese Aufgabe wird durch ein Verfahren mit den Merkmalen des Hauptanspruchs gelöst. Die Unteransprüche beschreiben bevorzugte Weiterbildungen oder Ausgestaltungen der Erfindung.

Die Erfindung geht gemäß den Merkmalen des Oberbegriffs des Hauptanspruchs demnach aus von einem Verfahren zum Herstellen bombierter, schlauchförmiger Erzeugnisse aus einem Schlauchzuschnitt, wie beispielsweise Luftfedern, wobei der Schlauchzuschnitt an seinen Enden mit geeigneten Mitteln abgedichtet und mit einem Innenüberdruck sowie einer Temperatur beaufschlagt wird. Zudem ist zur Lösung der gestellten Aufgabe vorgesehen, dass die Abdichtmittel nach anschließender Druckentlastung als Bestandteile des hergestellten Erzeugnisses an diesem Erzeugnis verbleiben.

Es erfolgt somit die endgültige Formgebung des Schlauchzuschnitts im bereits zumindest teilweise zusammengebauten Zustand des späteren Luftfedermoduls, das einen Schlauchzuschnitt, einen Deckel und einen Abrollkolben aufweist. Auf diese Weise müssen die an den Abdichtmitteln eingespannten Enden des Schlauchzuschnitts nicht nochmals gelöst und gegebenenfalls vor der Endmontage des Luftfedermoduls zum Teil abgetrennt werden. Montageschritte und Verschnitt werden also Kosten sparend reduziert.

Vorteilhafterweise kann vorgesehen sein, dass ein mit den Abdichtmitteln versehener unvulkanisierter Schlauchzuschnitt in eine Vulkanisationsform gebracht, anschließend mit einem solchen Innenüberdruck beaufschlagt wird, dass sich der Schlauchzuschnitt nach außen wölbt und eine bombierte Form annimmt, dass in einem weiteren Verfahrensschritt durch geeignete Temperaturbeaufschlagung und Innendruck - Beaufschlagung die Vulkanisation eingeleitet sowie nach der Vulkanisation das fertige Erzeugnis der Vulkanisationsform entnommen wird.

Diese Weiterbildung des Verfahrens ist insbesondere für unvulkanisierte Schlauchzuschnitte nutzbar. Dabei ist es sinnvoll, wenn zum Zweck der Vulkanisation der auf den Schlauchzuschnitt wirkende Innenüberdruck auf ein geeignetes Vulkanisationsniveau erhöht wird. Dies kann vorteilhafterweise durch Zuleitung eines unter Druck stehenden Fluids über geeignete Öffnungen in zumindest einem der Abdichtmittel erfolgen. Die Beaufschlagung mit der notwendigen Vulkanisationstemperatur erfolgt zweckmäßigerweise dadurch, dass die Vulkanisationsform mit heißem Fluid, beispielsweise Heißdampf, befüllt wird.

In einer dazu alternativen, durchaus vorteilhaften Ausgestaltung des Erfindungsgedankens kann jedoch auch vorgesehen sein, dass ein mit den Abdichtmitteln versehener, teil- oder ausvulkanisierter Schlauchzuschnitt in einer beheizbaren Kammer bzw. in einem Autoklaven beheizt und darin unter Innenüberdruck über eine bestimmte Zeit gelagert wird, bis er eine nach außen gewölbte, bombierte Form annimmt, und dass anschließend das fertige Erzeugnis der Kammer entnommen wird. Das Verfahren kann somit teilvulkanisierte Bauteile ausvulkanisieren oder als reines Formgebungsverfahren eines vulkanisierten Bauteils dienen.

Eine weitere sinnvolle Weiterbildung der Erfindung sieht vor, dass der Schlauchzuschnitt an einem Ende mit einem deckelartigen Element und an seinem anderen Ende mit einem kolbenartigen, vorzugsweise konischen Element abgedichtet wird. Äußerst vorteilhaft bildet dabei das deckelartige Element den Deckel einer zu erzeugenden Luftfeder und das kolbenartige Element den Abrollkolben der zu erzeugenden Luftfeder. Somit steht nach Beendigung des Verfahrens gleich ein einbaufähiges Erzeugnis zur Verfügung, nämlich die fertige Luftfeder, ohne dass an dem Erzeugnis selbst noch weitere Montageschritte notwendig wären.

Die Befestigung des Schlauchzuschnitts an dem Deckel bzw. an dem Abrollkolben der Luftfeder erfolgt in zweckmäßiger Weise mittels geeigneter Klemmelemente, beispielsweise mittels Klemmringe. Eine Befestigung ist aber beispielsweise auch mittels Drahtkerne möglich.

Zumindest bei Schlauchzuschnitten, die in unvulkanisiertem Zustand dem Verfahren unterzogen werden, ist es sehr vorteilhaft, wenn die an der Klemmung des Schlauchzuschnitts beteiligten Flächen zumindest teil- oder bereichsweise mit geeigneten Haftvermittlern versehen sind. Dies verlängert zum einen die Haltbarkeit der Klemmung, zum anderen wird insbesondere die Dichtigkeit der Verbindung erhöht.

Eine äußerst zweckmäßige Ausgestaltung des erfindungsgemäßen Verfahrens sieht vor, dass der Schlauchzuschnitt zylindrisch vorvulkanisiert, anschließend an den Abdichtmitteln befestigt und dann durch geeignete Beaufschlagung mit einem Innenüberdruck und einer geeigneten Temperatur einer Ausvulkanisation zugeführt wird. Hierdurch kann die Fadenlage des Schlauchzuschnitts verbessert werden. Durch die Vorvulkanisation wird die Fadenlage des Schlauchzuschnitts in demselben zunächst ausreichend stabilisiert und kann sich bei der späteren, weiterhin notwendigen Aufweitung des Schlauchzuschnitts nicht ungünstig verändern.

Das erfindungsgemäße Verfahren erzeugt Gewebeschläuche mit einer im drucklosen Zustand tonnenförmigen, bombierten Außenkontur. Luftfedern mit derartig geformten Gewebeschläuchen sind in der Lage drucklos abzurollen. Es kommt also bei einer Belastung der drucklosen Luftfeder nicht zu einem nachteiligen inneren Kontakt des am Abrollkolben anliegenden Schlauchabschnittes mit einem anderen, engeren Schlauchabschnitt. Außerdem führt die Annäherung des Außendurchmessers der Luftfeder im drucklosen Zustand an den Außendurchmesser unter Druck zu einer Reduzierung der Umfangsdehnung im Betrieb und damit zu einer Verlängerung der Luftfeder - Lebensdauer.

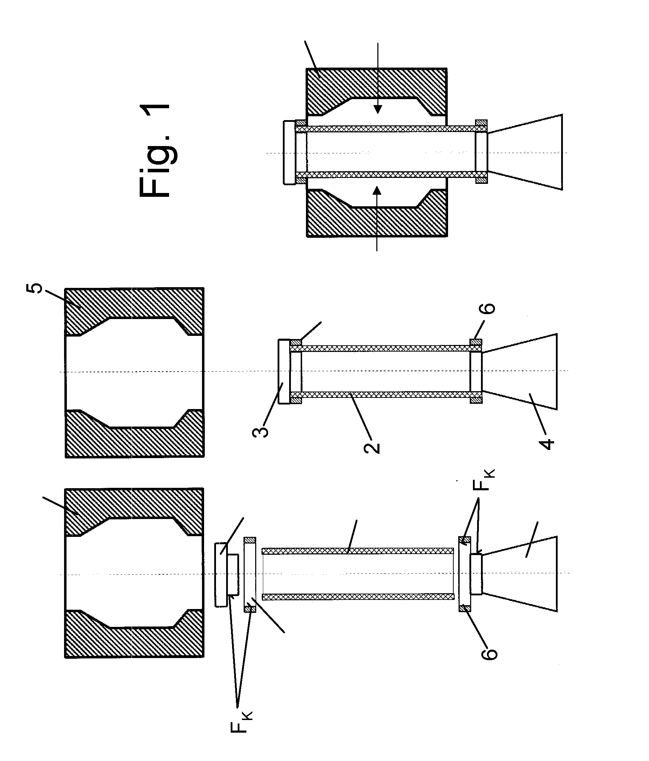

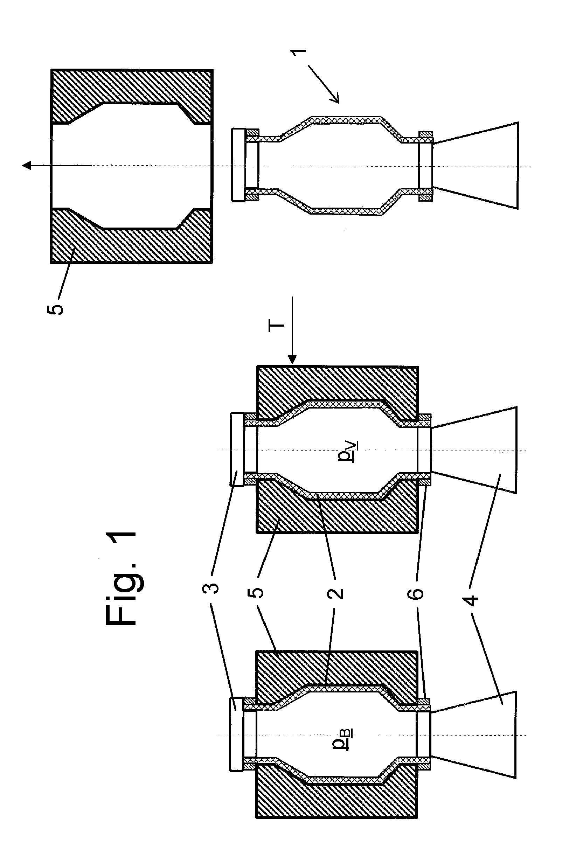

Ein bevorzugtes Ausführungsbeispiel des erfindungsgemäßen Verfahrens wird nachfolgend anhand der beiliegenden Zeichnung näher erläutert. Dabei zeigt die einzige Fig.1 die einzelnen Verfahrensschritte 1 a bis 1 f unter Verwendung einer Vulkanisationsform in einer stark vereinfachten Darstellung.

Zunächst wird auf Fig. 1a Bezug genommen. Darin sind ein zylindrischer Schlauchzuschnitt 2, im Bereich des oberen Endes des Schlauchzuschnitts 2 ein Luftfeder-Deckel 3, im Bereich des unteren Endes des Schlauchzuschnitt 2 ein sich nach oben konisch verjüngender Luftfeder-Abrollkolben 4 und im Bereich der beiden Enden des Schlauchzuschnitts 2 Klemmringe 6 gezeigt. Oberhalb des Luftfeder-Deckels 3 ist eine Vulkanisationsform 5 dargestellt, deren Innenraum im Längsschnitt eine nach außen gewölbte, in etwa tonnenförmige Geometrie aufweist. Luftfeder-Deckel 3, Luftfeder - Abrollkolben 4 und die Klemmringe 6 weisen Klemmflächen F_{K} auf, die zur luftdichten Klemmung des Schlauchzuschnitts 2 zwischen diesen Bauteilen (3, 6; 4, 6) dienen. Zur Verbesserung der mittels der Klemmung gewünschten Verbindung der beteiligten Bauteile können die Klemmflächen F_{K} mit geeigneten Haftvermittlern versehen sein. Zur besseren Darstellung zeigt die Fig.1a die Einzelkomponenten teilweise in einer Explosionsdarstellung.

In Fig.1b ist dargestellt, wie sowohl der Luftfeder-Deckel 3 als auch Luftfeder - Abrollkolben 4 mittels der Klemmringe 6 mit den Enden des Schlauchzuschnitts 2 verklemmt sind. Fig. 1c zeigt, wie im nächsten Verfahrensschritt die Vulkanisationsform 5 den noch zylindrischen Schlauchzuschnitt 2 bereits in etwa konzentrisch umgibt und radial nach innen zugefahren wird (siehe Pfeile), so dass die beiden Formteile anschließend eine druckdichte Vulkanisationsform 5 bilden.

In Fig. 1d ist dargestellt, dass im Schlauchzuschnitt 2 in nicht näher dargestellter Weise ein Innenüberdruck p_{B bzw.} Bombierungsdruck aufgebracht wird, welches beispielsweise mittels Druckluft erfolgt, der dazu führt, dass sich der Schlauchzuschnitt 2 radial nach außen wölbt, sich dabei an die Innenwandung der Vulkanisationsform 5 anschmiegt und dadurch eine in etwa tonnenförmige, bombierte Form annimmt. Dabei wirken sowohl der Luftfeder-Deckel 3 als auch der Luftfeder-Abrollkolben 4 durch die Nutzung der Klemmringe 6 als Abdichtmittel, die ein Ausweichen der Luft aus dem Inneren des Schlauchzuschnitts 2 verhindern.

In Fig. 1e ist angedeutet, dass zum Zwecke der Vulkanisation der Innenüberdruck p_{B} weiter erhöht ist und auf einen Innenüberdruck p_{V} (Vulkanisationsdruck) eingestellt ist, der zur Einleitung der Vulkanisation geeignet ist. Des Weiteren ist mittels eines Pfeils angedeutet, dass die Temperatur der Vulkanisationsform 5 auf eine geeignete Vulkanisationstemperatur T erhöht wird. Dies kann beispielsweise durch Befüllen der Vulkanisationsform 5 mit Heißdampf erfolgen (nicht näher dargestellt).

Fig. 1f zeigt schließlich, wie am Ende des Vulkanisationsvorgangs die Vulkanisationsform 5 wieder radial geöffnet und nach oben entfernt wird, so dass das bombierte, schlauchförmige Erzeugnis 1 (hier eine Luftfeder) entnommen werden kann. Die Luftfeder 1 ist in diesem Verfahrensstadium noch drucklos und muss für den Einsatz in Kraftfahrzeugen entsprechend mit einem geeigneten Betriebsdruck versehen werden.

### Bezugszeichen

- 1: Luftfeder
- 2: Schlauchzuschnitt
- 3: Luftfeder-Deckel
- 4: Luftfeder-Abrollkolben
- 5: Vulkanisationsform
- 6: Klemmringe
- p_{B}: Innenüberdruck zum Bombieren des Schlauchzuschnitts
- p_{V}: Innenüberdruck zum Vulkanisieren des Schlauchzuschnitts
- F_{K}: Klemmflächen
- T: Vulkanisationstemperatur

## Patentansprüche

1. Verfahren zum Herstellen bombierter, schlauchförmiger Erzeugnisse (1) aus einem Schlauchzuschnitt (2), wie beispielsweise Luftfedern, wobei der Schlauchzuschnitt (2) an seinen Enden mit geeigneten Mitteln (3, 4) abgedichtet und mit einem Innenüberdruck (p_{B}; p_{V}) sowie einer Temperatur (T) beaufschlagt wird, **dadurch gekennzeichnet, dass** die Abdichtmittel (3, 4) nach anschließender Druckentlastung als Bestandteile des hergestellten Erzeugnisses (1) an diesem Erzeugnis verbleiben.

2. Verfahren nach Anspruch 1, **dadurch gekennzeichnet, dass** ein mit den Abdichtmitteln (3, 4) versehener unvulkanisierter Schlauchzuschnitt (2) in eine Vulkanisationsform (5) gebracht, anschließend mit einem solchen Innenüberdruck (p_{B}) beaufschlagt wird, dass sich der Schlauchzuschnitt (2) nach außen wölbt und eine bombierte Form annimmt, dass in einem weiteren Verfahrensschritt durch geeignete Temperaturbeaufschlagung (T) und Innenüberdruck-Beaufschlagung (p_{V}) die Vulkanisation eingeleitet sowie nach der Vulkanisation das fertige Erzeugnis (1) der Vulkanisationsform (5) entnommen wird.

3. Verfahren nach Anspruch 1 oder 2, **dadurch gekennzeichnet, dass** zum Zweck der Vulkanisation der auf den Schlauchzuschnitt (2) wirkende Innenüberdruck (p_{B}) auf einen geeigneten Vulkanisationsdruck (p_{V}) erhöht wird.

4. Verfahren nach einem der vorhergehenden Ansprüche, **dadurch gekennzeichnet, dass** die Vulkanisationsform (5) mit heißem Fluid, vorzugsweise Heißdampf, befüllt wird.

5. Verfahren nach Anspruch 1, **dadurch gekennzeichnet, dass** ein mit den Abdichtmitteln (3, 4) versehener, teil- oder ausvulkanisierter Schlauchzuschnitt in einer beheizbaren Kammer beheizt und darin unter Innenüberdruck über eine bestimmte Zeit gelagert wird, bis er eine nach außen gewölbte, bombierte Form annimmt und dass anschließend das fertige Erzeugnis der Kammer entnommen wird.

6. Verfahren nach einem der vorhergehenden Ansprüche, **dadurch gekennzeichnet, dass** der Schlauchzuschnitt (2) an einem Ende mit einem deckelartigen Element (3) und an seinem anderen Ende mit einem kolbenartigen, beispielsweise konischen Element (4) abgedichtet wird.

7. Verfahren nach einem der vorhergehenden Ansprüche, **dadurch gekennzeichnet, dass** das deckelartige Element (3) den Deckel einer zu erzeugenden Luftfeder (1) und das kolbenartige Element (4) den Abrollkolben der zu erzeugenden Luftfeder (1) bildet.

8. Verfahren nach einem der vorhergehenden Ansprüche, **dadurch gekennzeichnet, dass** die Befestigung des Schlauchzuschnitts (2) mit dem Deckel (3) bzw. des Schlauchzuschnitts (2) mit dem Abrollkolben (4) der Luftfeder (1) mittels geeigneter Klemmelemente (6) erfolgt.

9. Verfahren nach Anspruch 8, **dadurch gekennzeichnet, dass** an der Klemmung des Schlauchzuschnitts (2) beteiligte Flächen (F_{K}) zumindest teilweise oder bereichsweise mit geeigneten Haftvermittlern versehen sind.

10. Verfahren nach einem der vorhergehenden Ansprüche, **dadurch gekennzeichnet, dass** der Schlauchzuschnitt (2) zylindrisch vorvulkanisiert, anschließend an den Abdichtmitteln (3, 4) befestigt und dann durch geeignete Beaufschlagung mit einem Innenüberdruck (p_{B} bzw. p_{V}) und einer Temperatur (T) einer Ausvulkanisation zugeführt wird.
